# EUROPEAN PATENT SPECIFICATION

(11) **EP 1 102 529 B1**
(45) Date of publication and mention of the grant of the patent: **23.07.2003**
(21) Application number: 00925103.4
(22) Date of filing: 11.05.2000
(51) Int. Cl.: A01K 5/01, A01K 5/00

(54) **MINERAL SUPPLEMENT FEEDER**
VERTEILER VON MINERALZUSATZSTOFFEN.
DISTRIBUTEUR DE COMPLEMENT MINERAL

(30) Priority: 17.05.1999 DK 67499
(43) Date of publication of application: 30.05.2001
(73) Proprietor: Foged, Henning Lyngsö, 8200 Aarhus N (DK)
(72) Inventor: Foged, Henning Lyngsö, 8200 Aarhus N (DK)
(74) Representative: Elmeros, Claus
(86) International application number: DK0000259
(87) International publication number: WO00069254

(56) References cited:
- US-A- 2 789 532
- US-A- 4 388 996
- US-A- 4 440 111
- US-A- 5 394 832

## Description

### Technical field to which the invention relates

The invention relates to a mineral supplement feeder of the self-righting type to be used for grazing livestock, such as cattle. The mineral supplement feeder consists of a hemispheric bottom with a plane base, a fodder tray, a standardised contra weight placed in the bottom, and a hood with an opening and an integrated front lip, attached to the bottom and the fodder tray with plastic screws.

### Background art and citation of relevant documents

Such a mineral supplement feeder is known from US patent 4,440,111.

The known mineral supplement feeder has a weighed hemispheric base, whereby the mineral supplement feeder will rest into a position that depends on the placement of the mineral supplements in the fodder tray. The risk is thereby, that the mineral supplement feeder will rest into a position with a backward slope from its centre axis and with the opening more or less laid bare for rain water, or for the livestock to drop faeces and urine into the mineral supplements. Rain water, faeces and urine makes the mineral supplements coagulate and unsavoury. It is a problem that the known mineral supplement feeder can rest in a position with the opening laid more or less bare.

The known mineral supplement feeder is produced in glass fibre and assembled before sale of the manufacturer of unnecessary many parts, namely hood, base, fodder tray and front lip plus screws and contra weight filled into the base. The contra weight is informed to be sand, stones or other. This has not made it possible to distribute the mineral supplement feeder in parts, and the transport from the producer to the user has been unnecessary expensive.

The known mineral supplement feeder has furthermore a contra weight which consists of material in the cavity between base and fodder tray, for instance sand to be filled in by the user. The type and weight of the contra weight is crucial for the function of the mineral supplement feeder; it will be damaged by frost if moisturised sand has been filled into it, the envisaged self-righting effect will not appear if too little sand is filled in, or if the contra weight for other reasons is of too small weight. It is on this background a problem that the known mineral supplement feeder is without a standardized contra weight.

### Technical problems to be solved

By constructing the mineral supplement feeder with a plane base (A) in the hemispherical bottom is attained, that it always will rest in a position vertically around its centre axis (if standing on a horizontal surface). This is an extra security against contamination of the mineral supplements with rain water, faeces and urine, and will at the same time improve the aesthetic impression of the mineral supplement feeder. The mineral supplement feeder maintains with the plane base its ability to give way for the animals' manipulation of it and raise itself afterwards without spill of mineral supplements.

Production in plastic rather than in glass fibre gives furthermore a number of advantages:

By integrating the front lip (H) with the hood (B) is achieved that: 1) The number of parts are reduced from 4 (hood, bottom, fodder tray and front lip) to 3 (hood (B), bottom (C) and fodder tray (D)). This gives a substantial simplification and cheapening of the production, the transport and the assembling of the mineral supplement feeder. 2) The risk for spill of mineral supplements is reduced to a minimum as the design of the lower corners of the opening is crucial in relation to the risk for spill of minerals when the mineral supplement feeder raises itself after being tipped over by the animals. 3) The durability is improved, as the integration of the hood and the front lip makes the mineral supplement feeder more stable.

The design of the hood, the bottom and fodder tray in plastic, plus a standardised concrete contra weight (E) enables a very easy transport from producer to user, as all parts are designed to be stacked on pallets. Transport over longer distances is therefore an economic possibility.

The design of the individual parts enables furthermore an easy assembling, which makes it possible to trade it as a do-it-yourself kit. The parts required for assembly are a bolt with washers and nut (F), plus plastic screws (G), as well as the mentioned 3 plastic parts and the concrete contra weight.

The integrated front lip in the hood (H) is designed so it can act as a handle which one person can grab for lifting of the mineral supplement feeder. This is useful and practical in connection with moving.

The satellite ring around the mineral supplement feeder, for assembling of the bottom, the fodder tray and the hood, is suitable for lifting of the mineral supplement feeder, especially if it shall be lifted by two persons (Detail I).

The contra weight consists of a centrally and low placed standardised fodder tray with a bolt going through it (F). This ensures the centre of gravity is placed as centrally and low as possible, and thereby that the mineral supplement feeder gets a better self-righting effect.

The design of the fodder tray ensures, that it will not be possible that mineral supplements can be deposited on a plateau on the edge of the fodder tray - the content of the fodder tray will due to its design always be led downwards to the centre of the fodder tray. This hinders that old mineral supplements will be heaped up in the mineral supplement feeder, and that these old and unsavoury mineral supplements are deposited at places which deteriorates the self-righting effect by dislocating the centre of gravity.

### Disclosure of the invention

In accordance with the invention, this object is in accordance with the above description characterised by having a hood with an integrated front lip, a bottom with a plane base, a contra weight which is a centrally and low placed standardised concrete block, and a surrounding satellite ring which functions as a handle.

### Advantageous effects of the invention

The invention ensures that the mineral supplement feeder, compared to a known mineral supplement feeder, 1) has a more secured self-righting effect, 2) has a better protection against spilt of mineral supplements, 3) has a better protection of the mineral supplements against contamination with rain water, faeces and urine, and 4) is easier to move, transport and handle.

### Description of at least one way of carrying out the invention by reference to the drawings

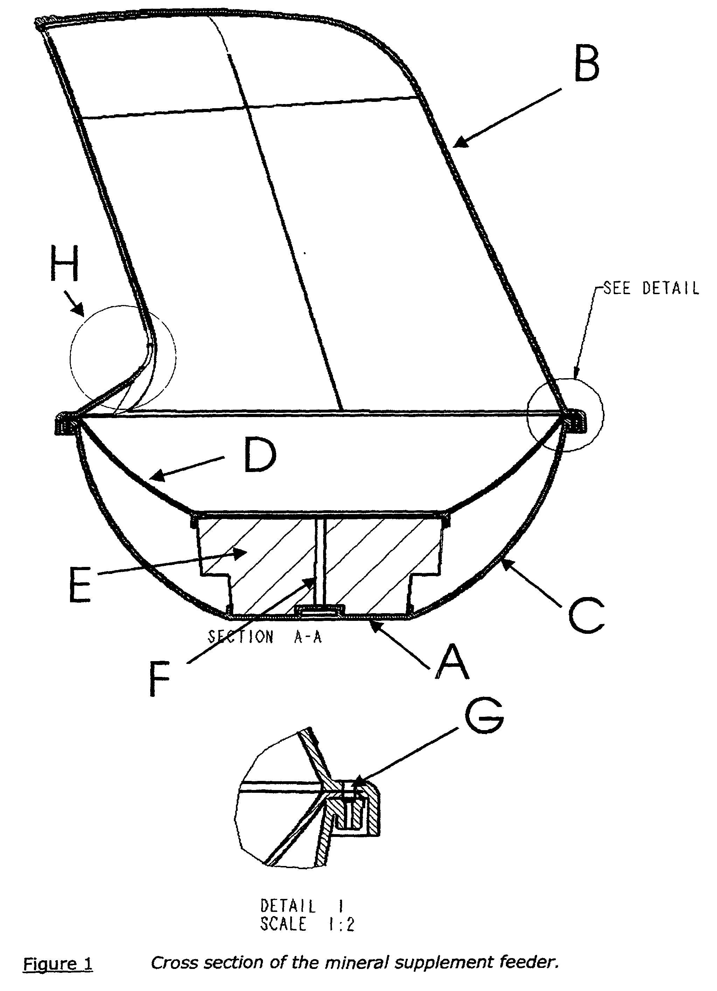

Figure 1 shows Section A-A with a plane base (A), hood (B) with integrated front lip (H), bottom (C), fodder tray (D), standardised concrete contra weight (E), a bolt for assembling of and going through the bottom, the fodder tray and the concrete contra weight (F), a satellite ring, where the plastic parts are assembled with plastic screws (G), designed so it also functions as a handle (Detail I).

## Claims

1. Mineral supplement feeder for grazing livestock of the self-righting type, consisting of a hemispheric bottom with a plane base (C), a fodder tray (D), a standardized contra weight (E) placed in the bottom, and a hood (B) with an opening and an integrated front lip (H) attached to the bottom and the fodder tray with screws
**characterised in that**,
the bottom (C) has a plane base (A), that the hood (B) has an integrated front lip (H), and that the contra weight (E) consists of a centrally and low placed standardised concrete block.

2. Mineral supplement feeder as claimed in claim 1,
**characterised in that**,
the concrete block (E) is mounted between the bottom and the fodder tray with a bolt going through (F).

3. Mineral supplement feeder as claimed in claim 2,
**characterised in that**,
the other parts are assembled with plastic screws (G).

4. Mineral supplement feeder as claimed in any of the previous claims,
**characterised in that**,
the front lip (H) is designed so it can function as a handle.

5. Mineral supplement feeder as claimed in claim 3,
**characterised in that**,
a satellite ring for assembly of the hood, the bottom and the fodder tray is designed to act as a handle.

6. Mineral supplement feeder as claimed in any of the previous claims,
**characterised in that**,
it is produced in plastic.

## Patentansprüche

1. Selbstausrichtender Verteiler von Mineralzusatzstoffen für Weidevieh, der aus einem halbkugelförmigen Unterteil mit einem ebenen Fuß (C), einem Futtertrog (D), einem Standardgegengewicht (E), das in dem Unterteil angeordnet ist, und einer Haube (B) mit einer Öffnung und einer integrierten vorderen Lippe (H) besteht, die an dem Unterteil und dem Futtertrog mit Schrauben befestigt ist,
**dadurch gekennzeichnet, dass**
das Unterteil (C) einen ebenen Fuß (A) hat, dass die Haube (B) eine integrierten vorderen Lippe (H) hat und dass das Gegengewicht (E) aus einem mittig und tief angeordneten Standardbetonblock besteht.

2. Verteiler von Mineralzusatzstoffen nach Anspruch 1,
**dadurch gekennzeichnet, dass**
der Betonblock (E) zwischen dem Unterteil und dem Futtertrog mit einem durchgehenden Bolzen (F) montiert ist.

3. Verteiler von Mineralzusatzstoffen nach Anspruch 2,
**dadurch gekennzeichnet, dass**
die anderen Teile mit Plastikschrauben (G) montiert sind.

4. Verteiler von Mineralzusatzstoffen nach einem der vorstehenden Ansprüche,
**dadurch gekennzeichnet, dass**
die vordere Lippe (H) so konstruiert ist, dass sie als ein Griff dient.

5. Verteiler von Mineralzusatzstoffen nach Anspruch 3,
**dadurch gekennzeichnet, dass**
ein umgebender Ring zum Montieren der Haube, des Unterteils und des Futtertrogs als als Griff wirkend konstruiert ist.

6. Verteiler von Mineralzusatzstoffen in einem der vorstehenden Ansprüche,
**dadurch gekennzeichnet, dass**
er aus Plastik hergestellt ist.

## Revendications

1. Distributeur de complément minéral pour bétail de pâturage du type à redressement automatique, consistant en un fond hémisphérique avec un socle plan (C), un plateau de fourrage (D), un contre-poids normalisé (E) placé dans le fond et un capot (B) avec une ouverture et une lèvre avant intégrée (H) fixée au fond et au plateau de fourrage avec des vis
**caractérisé en ce que**
le fond (C) présente un socle plan (A), **en ce que** le capot (B) présente une lèvre avant intégrée (H) et **en ce que** le contre-poids (E) consiste en un bloc de béton normalisé placé de manière centrale et basse.

2. Distributeur de complément minéral selon la revendication 1,
**caractérisé en ce que**
le bloc de béton (E) est monté entre le fond et le plateau de fourrage avec un boulon passant à travers (F).

3. Distributeur de complément minéral selon la revendication 2,
**caractérisé en ce que**
les autres parties sont assemblées avec des vis en plastique (G).

4. Distributeur de complément minéral selon l'une quelconque des revendications précédentes,
**caractérisé en ce que**
la lèvre avant (H) est conçue de façon à pouvoir fonctionner comme une poignée.

5. Distributeur de complément minéral selon la revendication 3,
**caractérisé en ce que**
un anneau satellitaire pour l'assemblage du capot, du fond et du plateau de fourrage est conçu pour agir en tant que poignée.

6. Distributeur de complément minéral selon l'une quelconque des revendications précédentes,
**caractérisé en ce que**
il est fabriqué en plastique.
